# EUROPEAN PATENT APPLICATION

(11) **EP 2 199 567 A2**
(43) Date of publication of application: **23.06.2010**
(21) Application number: 09178450.4
(22) Date of filing: 09.12.2009
(51) Int. Cl.: F02C 1/05, F02C 6/18, F02C 7/224

(54) **A system and method for heating a fuel using a solar heating system**

(30) Priority: 22.12.2008 US 341345
(71) Applicant: General Electric Company, Schenectady, NY 12345 (US)
(72) Inventor: Zhang, Hua, Greer, SC 29650 (US); Ranasinghe, Jatila, Simpsonville, SC 29681 (US)
(74) Representative: Gray, Thomas

(57) **Abstract**

An embodiment of the present invention may take the form of a system and method that may use at least at least one solar heating system (175) to heat the fuel consumed by a turbomachine (100). An embodiment of the present invention may incorporate concentrated solar power (CSP). Generally, CSP systems incorporate a plurality of lenses, mirrors, or combinations thereof and a tracking system to focus a large area of sunlight forming a small concentrated beam of light. The concentrated light may then be used as a heat source. In an embodiment of the present invention, the heat source may be used to partially or completely heat the fuel (130) consumed by a turbomachine (100). CSP systems may take the form of a solar trough system (200), a parabolic dish system (200), a solar power tower system (300), or the like.

## Description

### BACKGROUND OF THE INVENTION

The present invention relates to the fuel consumed by a turbomachine during operation; and more particularly to a system and method of utilizing a solar heating system to heat the fuel consumed by the turbomachine.

The temperature of the fuel consumed by a turbomachine is generally required to be within a specific range. The fuel may include, but is not limited to, various type of fuel oil, a natural gas, or a synthetic gas. The combustion systems of some turbomachines require a 'heated' fuel such as, heated natural gas. Generally, the natural gas supply does not heat the natural gas to the required temperature of the turbomachine. Here, a fuel heater is used to increase the temperature of the natural gas to meet the turbomachine requirements. The fuel heater requires an energy source to operate. Some fuel heaters require that the energy source provide between 5 and 7 megawatts of power. Typically, the energy source derives from the turbomachine, such as, but not limiting of, a generator coupled to the turbomachine, heated water from a heat recovery steam generator, or the like.

Solar power is a renewable energy source whose application and usage is on the rise. Solar power usage can be advantageous in regions where turbomachines are exposed to a sufficient amount of sunlight. Some of the benefits of using solar power include, but are not limited to: increase in the output and efficiency of the turbomachine and a reduction in turbomachine emissions.

The efficiency of solar power systems varies on the type of solar technology used. This variance can make the addition of solar technology to a turbomachine site cost prohibitive.

For the foregoing reasons, there is a need for a system that reduces the parasitic load associated with heating the fuel consumed by a turbomachine. The system should incorporate a relatively efficient solar technology to increase the temperature of the fuel consumed by the turbomachine.

### BRIEF DESCRIPTION OF THE INVENTION

In accordance with an embodiment of the present invention, there is provided a system for increasing a temperature of a fuel, the system comprising: a turbomachine comprising a combustion system for combusting a fuel; and at least one solar heating system configured for heating the fuel, wherein the solar heating system is integrated with a fuel supply system located upstream of the combustion system; wherein the at least one solar heating system heats the fuel from a first temperature to a second temperature.

### BRIEF DESCRIPTION OF THE DRAWINGS

There follows a detailed description of embodiments of the invention by way of example only with reference to the accompanying drawings, in which:
Figure 1 is a schematic illustrating an environment in which an embodiment of the present invention may operate;
Figure 2 is a schematic illustrating an example of a solar heating system in accordance with an embodiment of the present invention; and
Figure 3 is a schematic illustrating an example of a solar heating system in accordance with an alternate embodiment of the present invention.

### DETAILED DESCRIPTION OF THE INVENTION

The following detailed description of preferred embodiments refers to the accompanying drawings, which illustrate specific embodiments of the invention. Other embodiments having different structures and operations do not depart from the scope of the present invention.

Certain terminology is used herein for the convenience of the reader only and is not to be taken as a limitation on the scope of the invention. For example, words such as "upper," "lower," "left," "right," "front", "rear" "top", "bottom", "horizontal," "vertical," "upstream," "downstream," "fore", "aft", and the like; merely describe the configuration shown in the Figures. Indeed, the element or elements of an embodiment of the present invention may be oriented in any direction and the terminology, therefore, should be understood as encompassing such variations unless specified otherwise.

The present invention may be applied to the variety of turbomachines that produce a gaseous fluid, such as, but not limiting of, a heavy-duty gas turbine; an aero-derivative gas turbine; or the like. An embodiment of the present invention may be applied to either a single turbomachine or a plurality of turbomachines. An embodiment of the present invention may be applied to a turbomachine operating in a simple cycle or a combined cycle configuration.

An embodiment of the present invention takes the form of a system and method that may use at least at least one solar heating system to heat the fuel consumed by a turbomachine. The elements of the present invention may be fabricated of any material that can withstand the operating environment under which the solar heating system may function and operate.

An embodiment of the present invention may incorporate concentrated solar power (CSP). Generally, CSP systems incorporate a plurality of lenses, mirrors, or combinations thereof and a tracking system to focus a large area of sunlight forming a small concentrated beam of light. The concentrated light may then be used as a heat source. In an embodiment of the present invention, the heat source may be used to partially or completely heat the fuel consumed by a turbomachine. CSP systems may take the form of a solar trough system, a parabolic dish system, a solar power tower system, or the like.

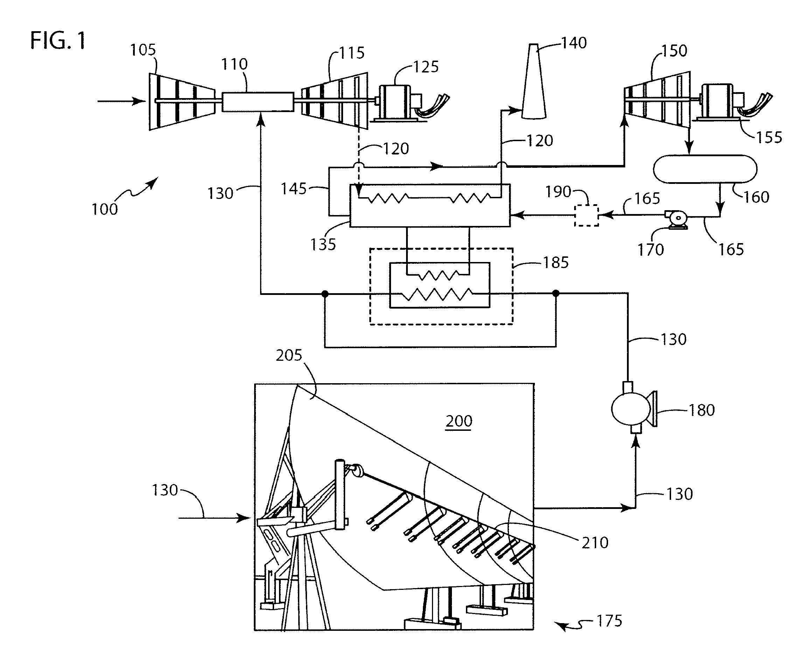

Referring now to the Figures, where the various numbers represent like elements throughout the several views, Figure 1 is a schematic illustrating an environment in which an embodiment of the present invention may operate. Figure 1 illustrates a turbomachine 100 in a combined cycle configuration, and at least one solar heating system 175. The turbomachine 100 generally comprises a compressor 105, a combustion system 110, and a turbine section 115. A stack 140 may be located downstream of the turbine section 115.

Generally, the compressor 105 receives and compresses an inlet air, represented by an arrow in Figure 1. The compressed air may flow downstream to the combustion system 110, where the compressed air is mixed with a fuel 130, such as, but not limiting of, a natural gas, and then combusted. The energy released during the combustion process flows downstream and drives the turbine section 115. A load, such as, but not limiting of, a generator 125 may be coupled to the turbomachine 100, wherein the mechanical torque generated in the turbine section 115 may drive the generator 125.

The exhaust 120 generated during the operation of the turbomachine 100 may flow downstream towards a heat recovery steam generator (HRSG) 135. The HRSG 135 utilizes a heat exchanging process to transfer some of the heat in the exhaust 120 to a condensate 165, creating steam 145. The steam 145 may flow downstream to a steam turbine 150, which may be coupled to a load, such as, but not limiting of, a generator 155. During the operation of the steam turbine 150, the steam 145 may condense in a condensor 160, forming a condensate 165. A pump 170, such as, but not limiting of, a boiler feed pump, may drive the condensate 165 into the HRSG 135, where the aforementioned process may be repeated. After flowing through the HRSG 135, the exhaust 120 may flow through the stack 140.

The turbomachine 100 receives the fuel 130 from a fuel supply system 133. The fuel supply system 133 may begin where the fuel 130 is supplied to the site; flow through a fuel compressor 180 and then to the combustion system 110. As discussed, some turbomachines 100 required a heated fuel for performance and/or other reasons. Here a fuel gas heater 185 may be positioned along the fuel supply system 133 to heat the fuel 130 to the desired operating range. The fuel gas heater 185 typically consumes roughly 2-8 megawatts of the energy produced by the turbomachine 100 if heated by IP water from the HRSG.

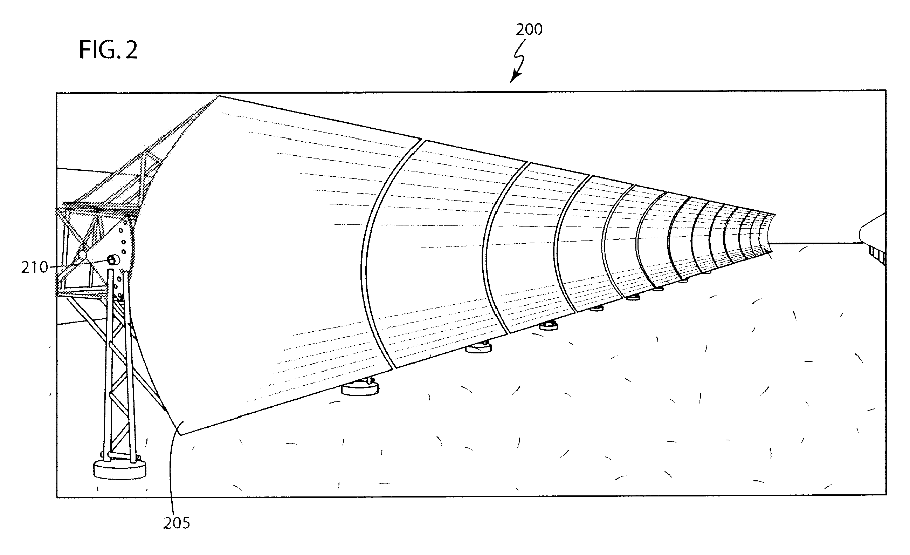

A first embodiment of the at least one solar heating system 175 may comprise a parabolic trough system 200, as illustrated in Figures 1 and 2. An embodiment of the parabolic trough system 200 may comprise a plurality of linear parabolic reflectors 205 that concentrate the sunlight onto a receiver 210 positioned along a focal line of the parabolic reflectors 205. The linear parabolic reflectors 205 are designed to follow the sunlight during the daylight hours by tracking along at least one axis (not illustrated in the figures). The receiver 210 may comprise a pipe through which the fuel 130 may flow. Here, the at least one solar heating system 175 may heat the fuel 130 via a convection form of heat transfer, such as, but not limiting of, forced convection, natural convection, or the like.

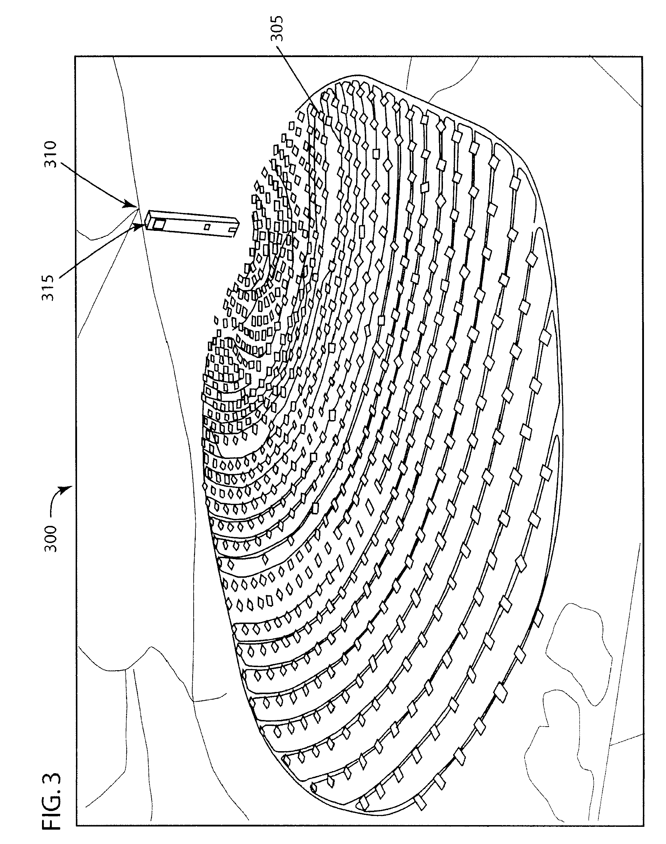

A second embodiment of the at least one solar heating system 175 may comprise a solar tower system 300, as illustrated in Figure 3. An embodiment of the solar tower system 300 may incorporate a plurality of tracking reflectors 305 for concentrating sunlight light onto a central receiver 310 near the top of a tower 315. The receiver 310 may comprise a pipe through which the fuel 130 may flow. Here, the at least one solar heating system 175 may heat the fuel 130 via a convection form of heat transfer, such as, but not limiting of, forced convection, natural convection, or the like.

In use, the at least one solar heating system 175 may heat the fuel 130 from a first temperature to a second temperature. Here, the first temperature may be considered the unheated temperature of the fuel 130. In an embodiment of the present invention, the first temperature may be up to about 150 degrees Fahrenheit. Furthermore, the second temperature may be considered the heated temperature of the fuel 130. In an embodiment of the present invention, the second temperature may be up to about 700 degrees Fahrenheit.

The at least one solar heating system 175 may provide a user with a plurality of benefits. In an embodiment of the present invention the at least one solar heating system 175 may provide up to about 8 megawatts of equivalent power generated by a typical heavy duty turbomachine. In an embodiment of the present invention, the at least one solar heating system 175 may have an efficiency of up to about 85%.

An alternate embodiment of the present invention may integrate the at least one solar heating system 175 with an existing fuel gas heater 185. This embodiment may allow for continued heating of the fuel 130 when the at least one solar heating system 175 may be to available to provide all of the energy required to heat the fuel. For example, but not limiting of, during extending periods of less than ideal sunlight the at least one solar heating system 175 and the fuel gas heater 185 may operate together to heat the fuel 130.

A second alternate embodiment involves using solar power to heat the condensate 165 before entering the HRSG 135. This may allow for an increase in the efficiency of the HRSG 135 by requiring less work to produce steam. Here, the at least one solar heating system 175 used to heat the fuel 130 may be integrated with the condensate loop. This may allow for the aforementioned at least one solar heating system 175 to heat the fuel 130 and the condensate 165.

Alternatively, a condensate heating system 190 may be integrated with the condensate loop to heat the condensate 165. The condensate heating system 190, may operate as an independent solar power system. The condensate heating system 190 may comprise the form and function of the at least one solar heating system 175, as previously described.

Alternatively, the fuel gas heater 185 may transfer excessive thermal energy from solar to the condensate 165 to increase the generation of steam 145 when sunlight is sufficient. Here, the fuel gas heater 185 may be function as fuel cooler.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, it should be appreciated that any arrangement, which is calculated to achieve the same purpose, may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A system for increasing a temperature of a fuel (130), the system comprising:
a turbomachine (100) comprising a combustion system (110) for combusting a fuel (130); and
at least one solar heating system (175) configured for heating the fuel (130), wherein the solar heating system (175) is integrated with a fuel supply system (133) located upstream of the combustion system (110);
wherein the at least one solar heating system (175) heats the fuel (130) from a first temperature to a second temperature.

2. The system of claim 1, wherein the at least one solar heating system (175) is integrated with the fuel supply system (133) and comprises at least one of: a parabolic trough system (200), a solar tower system (300), or combinations thereof.

3. The system of claim 1 or 2, further comprising a fuel gas heater (185) for assisting the at least one solar heating system (175) with heating the fuel (130).

4. The system of any of the preceding claims, wherein the first temperature of the fuel (130) is up to about 150 degrees Fahrenheit.

5. The system of any of the preceding claims, further comprising at least one condensate heating system (190) for heating a condensate of a HRSG (135).

6. The system of claim 5, wherein the at least one condensate heating system (190) comprises at least one of: a parabolic trough system (200), a solar tower system (175), or combinations thereof.

7. The system of any of the preceding claims, wherein the at least one solar heating system (175) heats the fuel (130) and heats a condensate (165) of a HRSG (135).

8. The system of any of the preceding claims, wherein the at least one solar heating system (175) utilizes a convection system of heating.

9. The system of any of the preceding claims, wherein the at least one solar heating system (175) provides up to about 8 megawatts of solar power.

10. The system of any of the preceding claims, wherein an efficiency of the at least one solar heating system (175) is up to about 85% efficient.

11. A method of increasing a temperature of a fuel, the method comprising:
providing a turbomachine, wherein the turbomachine comprises a combustion system for combusting a fuel;
providing at least one solar heating system configured for heating the fuel, wherein the at least one solar heating system is integrated with a fuel supply system; and
utilizing the at least one solar heating system to heat the fuel from a first temperature to a second temperature.

12. The method of claim 11, further comprising increasing the first temperature to up to about 150 degrees Fahrenheit.

13. The method of claim 11, further comprising increasing the second temperature of the fuel to up to about 700 degrees.

14. The method of any of claims 11 to 13, wherein the at least one solar heating system performs the steps of heating the fuel and heating a condensate entering a HRSG.

15. The method of any of claims 11 to 14, wherein the at least one solar heating system performs the step of utilizing a convection system of heating to increase a temperature of the fuel.
